# EUROPEAN PATENT SPECIFICATION

(11) **EP 2 867 181 B1**
(45) Date of publication and mention of the grant of the patent: **15.11.2017**
(21) Application number: 13737878.2
(22) Date of filing: 25.06.2013
(51) Int. Cl.: C04B 28/02, C04B 40/00

(54) **HYDRAULIC COMPOSITION**
HYDRAULISCHE ZUSAMMENSETZUNG
COMPOSITION HYDRAULIQUE

(30) Priority: 29.06.2012 JP 2012146697
(43) Date of publication of application: 06.05.2015
(73) Proprietor: Kao Corporation, Chuo-Ku Tokyo 103-8210 (JP)
(72) Inventor: HAMAI, Toshimasa, Wakayama-shi Wakayama 640-8580 (JP); SHIMODA, Masaaki, Wakayama-shi Wakayama 640-8580 (JP); SAGAWA, Keiichiro, Wakayama-shi Wakayama 640-8580 (JP); NAGASAWA, Koji, Wakayama-shi Wakayama 640-8580 (JP); KAWAKAMI, Hiroyuki, Wakayama-shi Wakayama 640-8580 (JP)
(74) Representative: Hoffmann Eitle
(86) International application number: PCT/JP2013/067962
(87) International publication number: WO 2014/003194

(56) References cited:
- EP-A1- 2 105 419
- WO-A1-2011/161447

## Description

### Field of the invention

The present invention relates to a method for producing a hydraulic composition.

### Background of the invention

Concrete products are given by kneading materials including cement, an aggregate, water, and a dispersant, placing in various forms, and curing (hardening). For these concretes, it is important to exhibit a high strength at an early age thereof from the viewpoint of productivity, or for increasing a form turnover rate. For this purpose, measures are taken, including (1) using an early strength cement, (2) using various polycarboxylic acid compounds as an admixture to reduce a water content in a cement composition, and (3) steam curing a concrete. The current demands for further increased productivity and the like sometimes want a more shortened step of curing. For example, it is demanded in production of some concrete products to shorten time until releasing and develop a high strength for about 24 hours of curing.

It is intended to shorten the curing time by heating curing such as steam curing. But there is a strong demand for a method without heat curing to save energy costs taken by steam curing, that is, to shorten the heat curing time and decrease the curing temperature.

US-A2004/244655 discloses an accelerator containing an inorganic nitrate, an alkanolamine, a hydroxycarboxylic acid, and a polyol.

JP-A2006-282414 discloses that a strength enhancing agent for cement containing glycerol or a glycerol derivative and a polycarboxylic acid copolymer at a specific ratio suppresses decreasing in fluidity of a cement composition and develops a high strength at an early age.

JP-A2011-515323 discloses that a belite-calcium-sulphoaluminate-ferrite (BCSAF) cement composition containing a BCSAF clinker and an alkanolamine can be enhanced in a short term strength, though it is a belite-rich portland cement, further disclosing use of an alkanolamine such as diethanolamine and triethanolamine as an accelerator for shortening a curing time and increasing compressive strength of a concrete containing a portland cement at an early-age (e.g. 1-day), moreover disclosing that an alkanolamine improves strength property of cement being a long term age, especially aged greater than 30 days, mortar and concrete. Examples of the alkanolamine are preferably diethanolamine and methyldiethanolamine.

WO 2011/161447 A1 relates to the use of methyldiethanolamine as a grinding aid for cement, and in particular its use as a strength enhancing grinding aid for cement.

EP 2 105 419 A1 relates to a belite-calcium sulphoaluminate-ferrite (BCSAF) cement composition comprising: a BCSAF clinker which clinker has the following mineralogical composition, based on the total weight of the clinker: 5 to 25%, preferably 10 to 20%, of a calcium aluminoferrite phase having the general formula C 2 A x F (1-x), wherein X is from 02 to 08; 15 to 35% of a calcium sulphoaluminate phase; 40 to 75% ofbelite (C 2 S);
from 001 to 10% in total of one or more minor phases selected from calcium sulphates, alkali metal sulphates, perovskite, calcium aluminates, gehlenite, free lime and periclase and/or a vitreous phase; a water-soluble calcium salt; and an alkanolamine.

### Summary of the invention

The present invention relates to a method for producing a hydraulic composition, containing a dispersant, a polyhydric alcohol, an amine compound, cement and water, wherein
the polyhydric alcohol is at least one compound selected from glycerol and alkylene oxide adducts to glycerol in which more than 0 to not more than 3 moles of an alkylene oxide is added on the average,
the amine compound is at least one compound selected from triisopropanolamine and alkyldiethanolamines having an alkyl group with 1 to 3 carbon atoms,
a content of C₄AF in the cement is not less than 6.0% by weight to not more than 15% by weight,
a content of gypsum dihydrate in the cement is not less than 0.5% by weight to not more than 10% by weight, and
a content of salts of nitrate and nitrite in the hydraulic composition is not more than 90 parts by weight per 100 parts by weight of the total amount of the polyhydric alcohol and the amine compound.

### Detailed description of the invention

US-A2004/244655 uses a nitrate. Nitrates and nitrites are hazardous materials of the Class 1 based on the Industrial Safety and Health L aw in Japan, and thus are desirably used in an amount as low as possible from the viewpoint of worker's safety. However, the concrete product according to this document could reduce its strength when prepared with a reduced amount of the nitrate.

JP-A2006-282414 describes 7-day compressive strength in examples, and JP-A2011-515323 describes 7-day, 28-day or 90-day compressive strength in use of triisopropanolamine or methyldiethanolamine in examples. However, there is no description about improvement in compressive strength at other stage such as an early strength of a hydraulic composition after about 24 hours from the preparation.

The present inventors have found that a combination of a specific cement, a specific polyhydric alcohol, and a specific amine compound provides a hydraulic composition that can develop a high 24-hour strength without a large amount of nitrate or the like and an additive for hydraulic composition that can form a stable aqueous solution additionally containing a dispersant. The present invention thus has been accomplished.

The present invention provides a method for producing a hydraulic composition developing high strength without heat curing after about 24 hours from the preparation of the composition (hereinafter, referred to as 24-hour strength).

According to the present invention, provided is a method for producing a hydraulic composition developing high 24-hour strength without heat curing after about 24 hours from the preparation of the composition.

A detailed mechanism to develop the effects of the present invention is still unknown, but presumed as follows.

One of mechanisms by that cement develops its strength includes generation of ettringite from C₄AF and sulfate ion and generation of a monosulfate from the ettringite. Under conditions with contents of gypsum dihydrate and C₄AF in cement within Specific ranges, a specific polyhydric alcohol such as glycerol can chelate calcium in the gypsum hydrate to facilitate generation of a sulfate ion, thereby facilitating generation of ettringite. In addition, a specific amine compound facilitates hydration of the ettringite to facilitate generation of the monosulfate, resulting in an increased early strength of a hydraulic composition. It is therefore considered that the early strength is enhanced with an increased amount of monosulfate after about 24 hours by procedures such that the polyhydric alcohol promotes the sulfate ion to generate, the produced amount of ettringite is increased and the specified amine compound promotes ettringite to react. Cement generally contains gypsum monohydrate and gypsum anhydrite, as well as gypsum dihydrate. Gypsum monohydrate and gypsum anhydrite have a lower dissolving rate than that of gypsum dihydrate. On an early strength of a hydraulic composition such as after about 24 hours from the preparation, an amount of gypsum dihydrate is thought to be an important influence as a sulfate sauce. A lower content of gypsum dihydrate leads to a smaller amount of sulfate ion and thus a smaller amount of ettringite generated, resulting in a hydraulic composition developing lower strength. A high content of gypsum dihydrate leads to a large amount of sulfate ion, but delays the development of strength, because the generation of the monosulfate from the ettringite occurs after exhaustion of the sulfate ion. Therefore, gypsum dihydrate should be contained in a specific amount.

The hydraulic composition produced according to the method of the present invention contains a dispersant, the specific polyhydric alcohol as described above (hereinafter, also referred to as component A), the specific amine compound as described above (hereinafter, also referred to as component B), a specific cement, and water.

### <Dispersant>

A dispersant used for hydraulic powder can be used if it is applied to cement. Specific examples of the dispersant include naphthalene polymers, melamine polymers, phenol polymers, lignin polymers, phosphate polymers, and polycarboxylic acid copolymers. For enhancing water reducibility or plasticizing property of the hydraulic composition, the dispersant is preferably selected from naphthalene polymers, lignin polymers, and polycarboxylic acid copolymers. From the viewpoint of an enhancement rate of 24-hour strength of the hydraulic composition, the dispersant is more preferably selected from naphthalene polymers and polycarboxylic acid copolymers, and even more preferably selected from naphthalene polymers. From the viewpoint of value of 24-hour strength of the hydraulic composition, the dispersant is preferably selected from polycarboxylic acid copolymers.

Specific examples include: for the naphthalene polymer, naphthalenesulfonate-formaldehyde condensates (e.g., Mighty 150 available from Kao Corporation) ; for the melamine polymer, melamine sulfonate-formaldehyde condensates (e.g., Mighty 150-V2 available from Kao Corporation) ; for the phenol polymer, phenolsulfonic acid-formaldehyde compounds (e.g., a compound described in JP-A49-104919); and for the lignin polymer, ligninsulfonates (e.g., Ultrazine NA available from Borregaard LignoTech, and SAN X, VANILLEX, and PEARLLEX available from Nippon Paper Industries Chemical Div.)

Phosphate ester copolymers such as of polyalkylene glycol mono (meth) acrylates and hydroxyalkyl methacrylate phosphates (e.g., a compound described in JP-A2006-52381) may also be used.

Examples of the polycarboxylic acid copolymer include copolymers of (polyalkylene glycol) mono(meth)acrylates and carboxylic acids such as (meth)acrylic acid (e.g., a compound described in JP-A8-12397), copolymers of unsaturated alcohols having a polyalkylene glycol moiety and carboxylic acids such as (meth) acrylic acid, and copolymers of unsaturated alcohols having a polyalkylene glycol moiety and dicarboxylic acids such as maleic acid. As used herein, the " (meth) acrylic acid" refers to a carboxylic acid selected from acrylic and methacrylic acids (the same applies below).

Specific examples of the polycarboxylic acid copolymer include a copolymer produced from polymerization of (1) a monomer represented by the formula (1) and (2) a monomer represented by the formula (2) [hereinafter, referred to as the polycarboxylic acid copolymer (I)]: 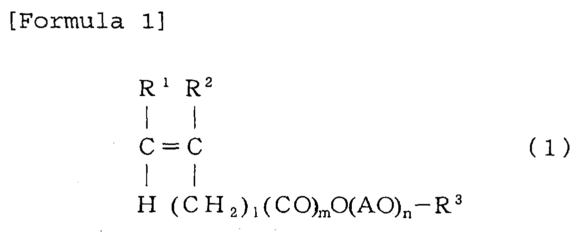 wherein,
R¹ and R² represent a hydrogen atom or a methyl group,
1 represents the number from 0 to 2,
m represents the number equal to 0 or 1,
AO represents an alkyleneoxy group having 2 to 4 carbon atoms,
n represents an average number of AO added, ranging from 5 to 150, and
R³ represents a hydrogen atom or an alkyl group having 1 to 4 carbon atoms. 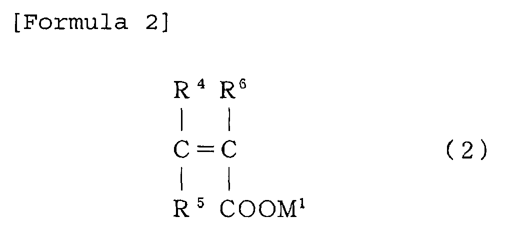
wherein,
R⁴, R⁵, and R⁶ each represent a hydrogen atom, a methyl group, or (CH₂)ₘ₁COOM²,
M¹ and M² each represent a hydrogen atom, an alkali metal, an alkaline earth metal (1/2 atom), an ammonium, an alkyl ammonium, or a substituted alkyl ammonium, and
ml represents the number from 0 to 2, and
in the formula, (CH₂)ₘ₁COOM² and COOM¹ may together form an anhydride.

From the viewpoint of fluidity of the hydraulic composition, in the formula (1), AO preferably represents an alkyleneoxy group having 2 or 3 carbon atoms, and more preferably having 2 carbon atoms (i.e., ethyleneoxy group).

From the viewpoint of enhancement of 24-hour strength of the hydraulic composition, n preferably represents the number of not less than 9, more preferably not less than 20, even more preferably not less than 50, and even more preferably not less than 70. From the viewpoint of initial fluidity of the hydraulic composition, n preferably represents the number of not more than 150, and even more preferably not more than 130. Accordingly, n preferably represents the number of 9 to 150, more preferably 20 to 150, even more preferably 50 to 130, and even more preferably 70 to 130.

In the case of m representing 0, 1 preferably represents the number equal to 1 or 2. In the case of m representing 1, 1 preferably represents 0. From the viewpoint of polymerization to produce the copolymer, m preferably represents 1. In the case of m representing 0, from the viewpoint of easiness in preparation of the monomer, R³ preferably represents a hydrogen atom. In the case of m representing 1, from the same viewpoints, R³ preferably represents an alkyl group having 1 to 4 carbon atoms, and from the viewpoint of solubility in water, more preferably a methyl group.

Examples of the monomer (1) include polyalkylene glycol (meth) acrylates and ethers produced by adding alkylene oxides to alkenyl alcohols. From the viewpoint of polymerization to produce the copolymer, the monomer (1) is preferably an ester of a polyalkylene glycol with (meth)acrylic acid.

An ester with an alkylene glycol endcapped at one side etc. may be used as an ester of a polyalkylene glycol with (meth)acrylic acid. Specific examples of the ester include methoxypolyethylene glycol acrylate, methoxypolyethylene glycol methacrylate, ethoxypolyethylene glycol acrylate, and ethoxypolyethylene glycol methacrylate. At least one of these esters may be used.

An allyl alcohol-ethylene oxide adduct and the like may be used as the ether produced by adding an alkylene oxide to an alkenyl alcohol. Specific examples of the ether include ethylene oxide adducts to methallyl alcohol and ethylene oxide adduct to 3-methyl-3-butene-1-ol.

Examples of the monomer (2) include acrylic acid and salts thereof, methacrylic acid and salts thereof, maleic acid and salts thereof , and maleic anhydride. These monomers may be used alone or in combination. In the case of the monomer (1) in which m represents 1, from the viewpoint of polymerization to produce the copolymer, the monomer (2) is preferably selected from methacrylic acid and salts thereof. In the case of the monomer (1) in which m represents 0, from the same viewpoint, the monomer (2) is preferably selected from maleic acid and salts thereof, and maleic anhydride.

For increasing an initial fluidity of the hydraulic composition, in production of the polycarboxylic acid copolymer (I), a molar ratio of monomers (1) to (2), (1)/(2), is preferably not less than 3/97, more preferably not less than 5/95, and even preferably not less than 10/90, and also preferably not more than 70/30, more preferably not more than 50/50, and even more preferably not more than 30/70. Accordingly, the molar ratio (1)/(2) is preferably 3/97 to 70/30, more preferably 5/95 to 50/50, and even more preferably 10/90 to 30/70.

For increasing an initial fluidity of the hydraulic composition, in the polycarboxylic acid copolymer (I), the total of constitutional units derived from monomers (1) and (2) preferably accounts for not less than 50% by mole, more preferably not less than 80% by mole, and also preferably not more than 100% by mole of the whole constitutional units. The total of constitutional units derived from monomers (1) and (2) more preferably accounts for substantial 100% by mole. Accordingly, from the same viewpoints, the total of constitutional units derived from monomers (1) and (2) preferably accounts for 50 to 100% by mole, more preferably 80 to 100% by mole, and even more preferably substantial 100% by mole. At least one unit derived from other monomer than the monomer (1) or (2), such as an alkyl ester of unsaturated carboxylic acid, may be further used.

For increasing an initial fluidity of the hydraulic composition, the polycarboxylic acid copolymer (I) preferably has a weight average molecular weight of not less than 10000, more preferably not less than 35000, and even more preferably not less than 50000. For decreasing a viscosity of the hydraulic composition, the weight average molecular weight is preferably not more than 100000, more preferably not more than 80000, and even more preferably not more than 70000.

For increasing an initial fluidity of the hydraulic composition and decreasing a viscosity of the hydraulic composition, then, the weight average molecular weight is preferably 10000 to 100000, more preferably 35000 to 80000, and even more preferably 50000 to 70000. The weight average molecular weight is determined by gel permeation chromatography (GPC) under the following conditions.

### [GPC conditions]

Instrument: high performance GPC system, HLC-8320GPC

### (Tosoh Bioscience)

column: G4000PWXL + G2000PWXL (Tosoh Corporation)
eluent: 0.2 M phosphate buffer/CH₃CN = 9/1
flow rate: 1.0 mL/min
column temperature: 40°C
detection: refractive index detector (RI)
sample amount: 0.5 mg/mL
standard substance: polyethylene glycol for calculation

### <Component A>

The component A is the polyhydric alcohol that is at least one compound selected from glycerol and alkylene oxide adducts of glycerol at an average molar addition rate of more than 0 to not more than 3. From the viewpoint of enhancement of 24 -hour strength of the hydraulic composition, the polyhydric alcohol is preferably at least one compound selected from glycerol and alkylene oxide adducts of glycerol at an average molar addition rate of more than 0 to not more than 1.5, and more preferably glycerol. Examples of the alkylene oxide include ethylene oxide and propylene oxide. From the viewpoint of enhancement of 24-hour strength of the hydraulic composition, ethylene oxide is preferred. In the case of using a mixture of glycerol and different alkylene oxide adducts to glycerol, an average molar rate of alkylene oxide addition refers to a value calculated based on the total amount of alkylene oxide added in the whole mixture.

### <Component B>

The component B is the amine compound that is at least one compound selected from triisopropanolamine and alkyldiethanolamines having an alkyl group with 1 to 3 carbon atoms. From the viewpoint of enhancement of 24-hour strength of the hydraulic composition, the amine compound preferably contains triisopropanolamine and an alkyldiethanolamine having an alkyl group with 1 to 3 carbon atoms, more preferably triisopropanolamine and an alkyldiethanolamine having an alkyl group with 1 to 2 carbon atoms, even more preferably triisopropanolamine and an alkyldiethanolamine having an alkyl group with 1 carbon atom, and even more preferably an alkyldiethanolamine having an alkyl group with 1 carbon atom. Specific examples of the alkyldiethanolamines having an alkyl group with 1 to 3 carbon atoms include N-methyldiethanolamine, N-ethyldiethanolamine, N-propyldiethanolamine, and N-isopropyldiethanolamine. N-methyldiethanolamine is preferred. The alkyl group having 3 carbon atoms is preferably linear.

### <Cement>

The present invention uses cement containing C₄AF in an amount of not less than 6.0% by weight to not more than 15% by weight and gypsum dihydrate in an amount of not less than 0.5% by weight to not more than 10% by weight.

From the viewpoint of enhancement of 24-hour strength of the hydraulic composition, the cement preferably contains C₄AF in an amount of not less than 8.0% by weight, more preferably not less than 10% by weigh, and also preferably not more than 14% by weight, and more preferably not more than 13% by weight. Accordingly, from the viewpoint of enhancement of 24-hour strength of the hydraulic composition, the content of C₄AF in the cement is preferably 8.0 to 14% by weight, and more preferably 10 to 13% by weight. From the viewpoint of an enhancement rate of 24-hour strength of the hydraulic composition, the content is preferably not less than 6.0% by weight and not more than 7.0% by weight.

From the viewpoint of enhancement of 24-hour strength of the hydraulic composition, the cement preferably contains gypsum dihydrate in an amount of not less than 1% by weight, more preferably not less than 3% by weigh, and also preferably not more than 8% by weight, and more preferably not more than 6% by weight. Accordingly, from the viewpoint of enhancement of 24-hour strength of the hydraulic composition, the content of gypsum dihydrate in the cement is preferably 1 to 8% by weight, and more preferably 3 to 6% by weight. From the viewpoint of a rate of enhancement of 24-hour strength of the hydraulic composition, the content is preferably not less than 1% by weight, and also preferably not more than 8% by weight, and more preferably not more than 3% by weight. Accordingly, from the same viewpoint, the content is preferably 1 to 8% by weight, and more preferably 1 to 3% by weight. As to gypsum dihydrate that added in production of cement and that added later can be taken into calculation.

Examples of the cement include portland cements such as normal, early strength, moderate heat, low heat, and sulfate resisting portland cements; mixed cements such as with blast furnace slag (types A, B, and C), fly ash (types A, B, and C), silica (types A, B, and C) and calcium carbonate; eco cement, and white cement.

### <Hydraulic composition>

From the viewpoint of enhancement of 24-hour strength of the hydraulic composition, in the present invention, the hydraulic composition preferably contains the component A in an amount of not less than 0.01 parts by weight, more preferably not less than 0.03 parts by weight, and even more preferably not less than 0.05 parts by weight to 100 parts by weight of the cement. From the viewpoint of enhancement of 24-hour strength of the hydraulic composition, the amount of the component A is also preferably not more than 0.3 parts by weight, more preferably not more than 0.2 parts by weight, even more preferably not more than 0.1parts by weight, and even more preferably not more than 0.08 parts by weight to 100 parts by weight of the cement. Accordingly, from the viewpoint of enhancement of 24-hour strength of the hydraulic composition, the amount of the component A is preferably 0.01 to 0.3 parts by weight, more preferably 0.03 to 0.2 parts by weight, even more preferably 0.03 to 0.08 parts by weight, and even more preferably 0.05 to 0.08 parts by weight to 100 parts by weight of the cement.

From the viewpoint of enhancement of 24-hour strength of the hydraulic composition produced according to the method of the present invention, the hydraulic composition preferably contains the component B in an amount of not less than 0.01 parts by weight, and more preferably not less than 0.02 parts by weight, and also preferably not more than 0.1 parts by weight, more preferably not more than 0.05 parts by weight, and even more preferably not more than 0.03 parts by weight to 100 parts by weight of the cement. Accordingly, from the viewpoint of enhancement of 24-hour strength of the hydraulic composition, the amount of the component B is 0.01 to 0.1parts by weight, more preferably 0.02 to 0.05 parts by weight, and even more preferably 0.02 to 0.03 parts by weight to 100 parts by weight of the cement.

From the viewpoint of enhancement of 24-hour strength of the hydraulic composition produced according to the method of the present invention, the hydraulic composition preferably contains components A and B at a weight ratio, A/B, of not less than 20/80, more preferably not less than 40/60, even more preferably not less than 50/50,and even more preferably not less than 70/30, and also preferably not more than 95/5, more preferably not more than 90/10, and even more preferably not more than 85/15. Accordingly, from the viewpoint of enhancement of 24-hour strength of the hydraulic composition, the weight ratio A/B is preferably 20/80 to 95/5, more preferably 40/60 to 90/10, even more preferably 50/50 to 85/15, and even more preferably 70/30 to 85/15.

The hydraulic composition preferably contains the dispersant in an effective amount of not less than 0.05 parts by weight, more preferably not less than 0.1 parts by weight, and also preferably not more than 3 parts by weight, more preferably not more than 0.9 parts by weight, and even more preferably not more than 0.7 parts by weight to 100 parts by weight of the cement. With the content of not less than 0.05 parts by weight, the hydraulic composition has good fluidity, and with the content of not more than 3 parts by weight, the hydraulic composition hardens with little or no delay. From the viewpoints of fluidity and delay control in hardening of the hydraulic composition, the effective content of the dispersant is preferably 0.05 to 3 parts by weight, more preferably 0.1 to 0.9 parts by weight, and even more preferably 0.1 to 0.7 parts by weight to 100 parts by weight of the cement. In the case of using a polycarboxylic acid copolymer dispersant, the content of the dispersant is preferably 0.1 to 0.3 parts by weight to 100 parts by weight of the cement. In the case of using a naphthalene polymer dispersant, the content of the dispersant is preferably 0 .1 to 0.4 parts by weight to 100 parts by weight of the cement.

From the viewpoint of enhancement of 24-hour strength of the hydraulic composition produced according to the method of the present invention, in the hydraulic composition, a weight ratio [x 100 (%)] of water to the cement, water/cement, is preferably not more than 60, more preferably not more than 55, and also preferably not less than 15, more preferably not less than 20, and even more preferably not less than 35. Accordingly, from the viewpoint of enhancement of 24-hour strength of the hydraulic composition, the weight ratio, water/cement, is preferably 60 to 15, more preferably 60 to 20, and even more preferably 55 to 35.

The hydraulic composition produced according to the method of the present invention contains salts of nitrate and nitrite in the total amount of not more than 90 parts by weight to 100 parts by weight of the total of components A and B. From the viewpoint of formulation stability of the additive, 7-day strength, and an enhancement rate in strength, the content of salts of nitrate and nitrite is preferably not more than 80 parts by weight, more preferably not more than 60 parts by weight, even more preferably not more than 40 parts by weight, and even more preferably not more than 25 parts by weight to 100 parts by weight of the total of components A and B. From the viewpoint of safety in handling, the content is further preferably not more than 10 parts by weight, more preferably not more than 5 parts by weight, and even more preferably substantial 0 parts by weight to 100 parts by weight of the total of components A and B, or the hydraulic composition preferably contains substantial no salt of nitrate or nitrite. The hydraulic composition can develop a high 24-hour strength even without a salt of nitrate or nitrite.

The hydraulic composition produced according to the method of the present invention may further contain other additives or admixture materials such as an AE agent, a foaming booster, a thickening agent, silica sand, a foaming agent, a waterproofing agent, a defoaming agent, and a rust-proofing agent.

The hydraulic composition produced according to the method of the present invention contains water and a hydraulic powder, typically cement, and forms paste, mortar, concrete, or the like. The hydraulic composition produced according to the method of the present invention may contain an aggregate to form mortar or concrete. Examples of the aggregate include fine and coarse aggregates. Preferred examples of the fine aggregate include pit sand, land sand, river sand, and crushed sand. Preferred examples of the coarse aggregate include pit gravel, land gravel, river gravel, and crushed gravel. For some applications, light-weight aggregates may be used. Terms of aggregate are in accordance with "Concurito souran (Comprehensive bibliography of concrete)" (Jun. 10, 1998, Gijyutsu Shoin).

The hydraulic composition produced according to the method of the present invention is useful for various concretes in any field, including self-leveling concrete, refractory concrete, plaster concrete, gypsum slurry, light- or heavy-weight concrete, AE concrete, concrete for repairs, pre-packed concrete, tremie concrete, concrete for foundation improvement, grout concrete, and cold weather concrete, and more preferably useful for fresh concrete, concrete, and mortar, including precast concrete, self-leveling concrete, concrete for repairs, concrete for foundation improvement, grout concrete, and cold weather concrete.

### <Additive for hydraulic composition>

The additive for hydraulic composition used in the present invention contains a dispersant, a polyhydric alcohol as a component A, an amine compound as a component B, and water. The additive is disclosed in the same way as the hydraulic composition for preferred compounds of the dispersant, the component A and the component B and weight ratios etc.

From the viewpoints of initial fluidity and enhancement in 24-hour strength of a hydraulic composition, the additive preferably contains components A and B in the total amount of not less than 75% by weight, more preferably not less than 80% by weight, even more preferably not less than 90% by weight, and even more preferably not less than 95% by weight, and also preferably not more than 100% by weight, and more preferably substantial 100 % by weight of the whole components excluding water. From the same viewpoints, the additive preferably contains the dispersant and components A and B in the total amount of 75 to 100% by weight, more preferably 80 to 100% by weight, even more preferably 90 to 100% by weight, even more preferably 95 to 100% by weight, and even more preferably substantial 100% by weight of the whole components excluding water.

The additive preferably contains salts of nitrate and nitrite in the total amount of not more than 90 parts by weight to 100 parts by weight of the total of components A and B. From the viewpoint of formulation stability of the additive, the content of the salts is preferably not more than 80 parts by weight, and more preferably not more than 30 parts by weight, to 100 parts by weight of the total of components A and B. From the viewpoint of safety in handling, the content is more preferably not more than 5 parts by weight, and even more preferably 0 parts by weight to 100 parts by weight of total of components A and B, or the additive contains substantial no salt of nitrate or nitrite.

From the viewpoint of enhancement of 24-hour strength of the hydraulic composition, in the additive, a weight ratio of components A to B, A/B, is preferably not less than 20/80, more preferably not less than 40/60, even more preferably not less than 50/50, and even more preferably not less than 70/30, and also not more than 95/5, more preferably not more than 90/10, and even more preferably not more than 85/15. Accordingly, the weight ratio A/B is preferably 20/80 to 95/5, more preferably 40/60 to 90/10, even more preferably 50/50 to 85/15, and even more preferably 70/30 to 85/15.

For providing good workability, the additive for hydraulic composition preferably contains water in an amount of not less than 10% by weight, more preferably not less than 30% by weight, and even more preferably not less than 50% by weight, and also preferably not more than 90% by weight, and more preferably not more than 80% by weight. Accordingly, from the same viewpoint, the additive preferably contains water in an amount of 10 to 90% by weight, more preferably 30 to 80% by weight, and even more preferably 50 to 80% by weight.

The additive for hydraulic composition can be added to cement and water when they are kneaded to prepare a hydraulic composition.

The aspects of the present invention will be described below:
<1> A method for producing a hydraulic composition comprising adding an additive for hydraulic composition to cement and water when these are kneaded, wherein
   the additive comprises a dispersant, a polyhydric alcohol and an amine compound,
   the polyhydric alcohol is at least one compound selected from glycerol and alkylene oxide adducts to glycerol in which more than 0 to not more than 3 moles of an alkylene oxide is added on the average,
   the amine compound is at least one compound selected from triisopropanolamine and alkyldiethanolamines having an alkyl group with 1 to 3 carbon atoms,
   a content of C4AF in the cement is not less than 6.0% by weight to not more than 15% by weight,
   a content of gypsum dihydrate in the cement is not less than 0.5% by weight to not more than 10% by weight, and
   a content of salts of nitrates and nitrites in the hydraulic composition is not more than 90 parts by weight per 100 parts by weight of the total amount of the polyhydric alcohol and the amine compound.
<2> the method according to <1>, wherein a weight ratio of the polyhydric alcohol to the amine compound in the hydraulic composition, polyhydric alcohol/amine compound, is not less than 20/80, preferably not less than 40/60, more preferably not less than 50/50, and even more preferably not less than 70/30, and also not more than 95/5, more preferably not more than 90/10, and even more preferably not more than 85/15;
<3> the method according to <1> or <2>, wherein a content of the polyhydric alcohol in the hydraulic composition is not less than 0.01 parts by weight, preferably not less than 0.03 parts by weight, and more preferably not less than 0.05 parts by weight, and also not more than 0.3 parts by weight, preferably not more than 0.2 parts by weight, more preferably not more than 0.1 parts by weight, and even more preferably not more than 0.08 parts by weight to 100 parts by weight of the cement;
<4> the method according to any one of <1> to <3>, wherein a content of the amine compound in the hydraulic composition is not less than 0.01 parts by weight, and preferably not less than 0. 02 parts by weight, and also not more than 0.1 parts by weight, preferably not more than 0.05 parts by weight, and more preferably not more than 0.03 parts by weight to 100 parts by weight of the cement;
<5> The method according to any one of <1> to <4>, wherein the polyhydric alcohol is at least one compound selected from glycerol and alkylene oxide adducts of glycerol at an average molar addition rate of more than 0 to not more than 1.5.

### Examples

Examples and Comparative Examples will be described below. Examples are intended to illustrate the present invention, and not to limit the present invention.

### (1) Cement

### (1-1) Kinds of cement

C1: sulfate resisting portland cement (manufactured by Taiheiyo Cement Corporation)
C2: portland cement CEM1 42.5R (manufactured by LAFARGE)
C3: portland cement CEM1 42.5R (manufactured by HEIDELBERG)
C4: white portland cement (manufactured by Taiheiyo Cement Corporation)
C5 : portland cement CEM1 52.5R (manufactured by HEIDELBERG)
C6: portland cement CEM1 52.5R (manufactured by HEIDELBERG)
C5 was produced in a Milke factory, and C6 was produced in an Enci factory.

### (1-2) Quantification of minerals and gypsum dihydrate in cement

Minerals (e.g., C₄AF) and gypsum dihydrate in each cement were quantified with a powder X-ray diffraction apparatus RINT-2500 (Rigaku Corporation). Measurement conditions were: target: CuKα, tube current: 40 mA, tube voltage: 200 kV, and scanning range: 5 to 70 deg.2θ. Scanning conditions were: scan mode: step scan, step width: 0.02°, and measurement time per step: 2 seconds. 2.7 g of sample of cement and 0.3 g of standard "α-corundum (Al₂O₃)" were mixed and subjected to the powder X-ray diffraction. Peak areas of minerals were used to quantify the minerals based on a peak area of the standard α-corundum using a Rietveld analyzing software. The Rietveld analyzing software used was PDXL Ver.1.8 (Rigaku Corporation). In table 1, amounts of Minerals and gypsum dihydrate are collectively shown.

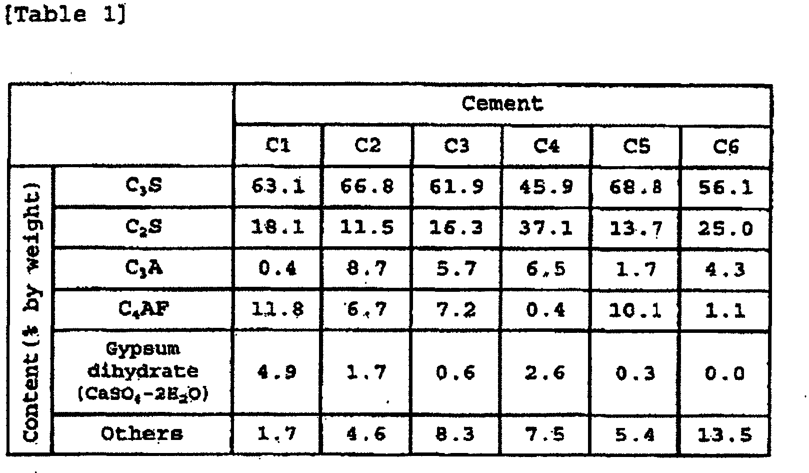

### (2) Dispersant

- PC1: polycarboxylic acid dispersant (prepared in Preparation Example 1, in the form of aqueous solution containing 40% solids by weight)
- PC2: polycarboxylic acid dispersant (prepared in Preparation Example 2, in the form of aqueous solution containing 45% solids by weight)
- NSF: naphthalene dispersant (Mighty 150, Kao Corporation, in the form of aqueous solution containing 40% solids by weight)

### Preparation Example 1 (preparation of PC1)

A glass reactor (four-neck flask) that contained 114 g of water and was equipped with a stirrer was subjected to atmosphere substitution with nitrogen, with stirring water, and heated to 80°C under nitrogen atmosphere. To the reactor were added an aqueous solution containing 300 g of solution of 60% by weight ω-methoxypolyethylene glycol monomethacrylate (average moles of ethylene oxide added: 120, ester purity: 100%) in water, 11.5 g of methacrylic acid (reagent grade, Wako Pure Chemical Industries, Ltd.), and 1.2 g of 3-mercaptopropionic acid and a solution of 1.9 g of ammonium persulfate in 45 g of water dropwise over 1.5 hours respectively. The mixture was aged for 1 hour at 80°C. To this was added a solution of 0.8 g of ammonium persulfate in 15 g of water dropwise over 30 minutes and further aged for 1.5 hours at 80°C. Then, the mixture was cooled to 40°C or lower, and neutralized with 9.6 g of aqueous solution of 48% sodium hydroxide to give a product (degree of neutralization: 0.7) containing a copolymer having a weight average molecular weight of 54000 (PC1). A solid content of the product was adjusted with water to give an aqueous solution of 40% PC1 by weight. A molar ratio of monomers (1) to (2), (1)/(2), were 20/80.

### Preparation Example 2 (preparation of PC2)

In a glass reactor (four-neck flask) equipped with a stirrer, 333.7 g of water and 463.9 g of unsaturated polyalkylene glycol ether prepared by adding 50 moles of ethylene oxide in average to a mole of 3-methyl-3-butene-1-ol were placed. The reactor was subjected to atmosphere substitution with nitrogen, with stirring, and heated to 60°C under nitrogen atmosphere. To the reactor were added 2.43 g of aqueous solution of 30% hydrogen peroxide dropwise, and then a solution of 62.7 g of acrylic acid in 37.3 g of water and a solution containing 0.94 g of L-ascorbic acid, 2.44 g of 3-mercaptopropionic acid, and 96.6 g of water dropwise over 3.0 hours and 3.5 hours, respectively. The mixture was aged for 1 hour at 60°C. Then, the mixture was cooled to 40°C or lower, and neutralized with an aqueous solution of 48% sodium hydroxide to give a product (degree of neutralization: 0.7) containing a copolymer having a weight average molecular weight of 62000 (PC2). A solid content of the product was adjusted with water to give an aqueous solution of 45% PC2 by weight. A molar ratio of monomers (1) to (2), (1)/(2), were 19/81.

### (3) Component A and comparative compounds

- Glycerin: purified glycerol (Kao Corporation)
- GlyEO1: adduct of glycerol with ethylene oxide (1 mole on the average), prepared according to Preparation Example 3
- GlyEO2: adduct of glycerol with ethylene oxide (2 moles on the average), prepared according to Preparation Example 4
- GlyEO4: adduct of glycerol with ethylene oxide (4 moles on the average), prepared according to Preparation Example 5
- DEG: diethylene glycol (Wako Pure Chemical Industries, Ltd., reagent grade)

### Preparation Example 3 (preparation of adduct of glycerol with 1 mole on the average of ethylene oxide (GlyEO1))

In a 2 L autoclave, 230.3 g of glycerol and 1.4 g of potassium hydroxide were heated to 130°C, with stirring at a rotation rate of about 600 rpm. The mixture was dehydrated for 30 minutes at 130°C under 1.3 kPa. The temperature of the mixture was further elevated to 155°C. To the reaction mixture was added 110.1 g of ethylene oxide (corresponding to one mole per mole of glycerol), and reacted at 155°C under 0.1 to 0.3 MPa (gauge pressure). Then, the mixture was cooled to 80°C to give a 1:1 molar (in average) adduct of glycerol with ethylene oxide

### (GlyEO1)

### Preparation Example 4 (preparation of adduct of glycerol with 2 moles on the average of ethylene oxide (GlyEO2))

An adduct of glycerol with 2 moles on the average of ethylene oxide (GlyEO2) was prepared in the same way as in Preparation Example 3, except that an amount of ethylene oxide reacted was 220.2 g (corresponding to two moles per mole of glycerol).

### Preparation Example 5 (preparation of adduct of glycerol with 4 moles on the average of ethylene oxide (GlyEO4))

An adduct of glycerol with 4 mole on the average of ethylene oxide (GlyEO4) was prepared in the same way as in Preparation Example 3, except that starting amounts of glycerol and potassium hydroxide were 115.2 g and 0.7 g, respectively, and an amount of ethylene oxide reacted was 220.2 g (corresponding to four moles per mole of glycerol).

### (4) Component B and comparative compounds

- MDEA: N-methyldiethanolamine (Nippon Nyukazai Co,Ltd., aminoalcohol MDA)
- EDEA: N-ethyldiethanolamine (Nippon Nyukazai Co,Ltd., aminoalcohol MED)
- TiPA: triisopropanolamine (Wako Pure Chemical Industries, Ltd., reagent grade)
- BDEA: N-butyldiethanolamine (Wako Pure Chemical Industries, Ltd., reagent grade)
- DMEA: dimethylethanolamine (Wako Pure Chemical Industries, Ltd., reagent grade)
- TEA: triethanolamine (Wako Pure Chemical Industries, Ltd. , reagent grade)

### (5) Other compounds

- lactic acid: Wako Pure Chemical Industries, Ltd. , reagent grade
- acetic acid: Wako Pure Chemical Industries, Ltd. , reagent grade
- Ca(NO₂)₂: Wako Pure Chemical Industries, Ltd., reagent grade
- Ca(NO₃)₂: Wako Pure Chemical Industries, Ltd., reagent grade

### (6) Preparation and evaluation of an additive for hydraulic composition

### (6-1) Preparation of an additive for hydraulic composition

Additives for hydraulic composition in Tables 3, 4-1, 4-2 and 5-9 were prepared as follows. To an aqueous solution of a dispersant were added a polyhydric alcohol, an amine compound, and other compound (s) at proportions (by weight) shown in Tables 3, 4-1, 4-2 and 5 to 9 such that the total solid content of the dispersant and components A and B accounted for 40% by weight to give an additive for hydraulic composition. If needed, water was added to adjust a concentration. Additives for hydraulic composition in Table 4-1 and Table 4-2 were prepared in the same way, except that a total solid content of components A and B accounted for 50% by weight of the additive.

### (6-2) Evaluation for formulation stability of an additive for hydraulic composition

Each additive for hydraulic composition was visually examined after 1 hour from the preparation, and judged as o in a case of a clear homogeneous state, or x in the other cases such as a clouded or separated state.

### (7) Preparation and evaluation of mortar (hydraulic composition)

### (7-1) Preparation of mortar

In a mortar mixer (universal mixing stirrer, model: 5DM-03-γ, Dalton Corporation), cement (C) and a fine aggregate (S) in amounts as shown in Table 2, were subjected to a process of dry mixing for 10 seconds. To the mixture were added mixing water (W) and a defoaming agent in such an amount that an air-entraining amount is not more than 2%. The mixture was subjected to a process of main kneading for 60 seconds at a low speed rotation (63 rpm) and further for 120 seconds at a high speed rotation (128rpm) in the mortar mixer to give a mortar. Mortars thus prepared were subjected to a hardening strength test described below.

It is noted that an amount of an additive for hydraulic composition in mixing water was very small and W in Table 1 represented an amount of the mixing water including the amount of the additive.

**[Table 2]**

| W/C | W | C | S |
|---|---|---|---|
| 50% by weight | 400g | 800g | 1600g |

- water (W): mixing water (containing a dispersant for hydraulic composition)
- cement (C): one of C1 to C6 in Table 1
- fine aggregate (S): area: Joyo, pit sand, FM = 2.67, density: 2.56 g/cm³

A weight ratio of water to cement, W/C, is 0.50 (50% by weight).

The fine aggregate was used in an amount of 200 parts by weight to 100 parts by weight of the cement.

### (7-2) Evaluation of hardening strength

According to JIS A 1132, each mortar was put by two layers in five cylindrical plastic molds (diameter of a base: 5 cm, height: 10 cm) and cured in the air (20°C) for 16 hours in a room at 20°C to prepare hardened samples. Samples hardened for 24 hours from the preparation of the mortar were demolded from a form. Three of them were measured for 24-hour compressive strength. The other two were further aged in water for 7 days at 20°C, and measured for 7-day compressive strength shown in Table 4-1 and Table 4-2. A measurement of compressive strength of a sample was according to JIS A 1108. An average value of three measured values (for 24-hour compressive strength) and an average value of two measured values (for 7-day compressive strength) were calculated.

Results of evaluations are shown in Tables 3, 4-1, 4-2 and 5 to 9.

Table 3 shows results with various cements. Tables 4-1, 4-2 and 5 to 9 show result of respective cements with various dispersants, polyhydric alcohols, amine compounds, and other compounds in various amounts.

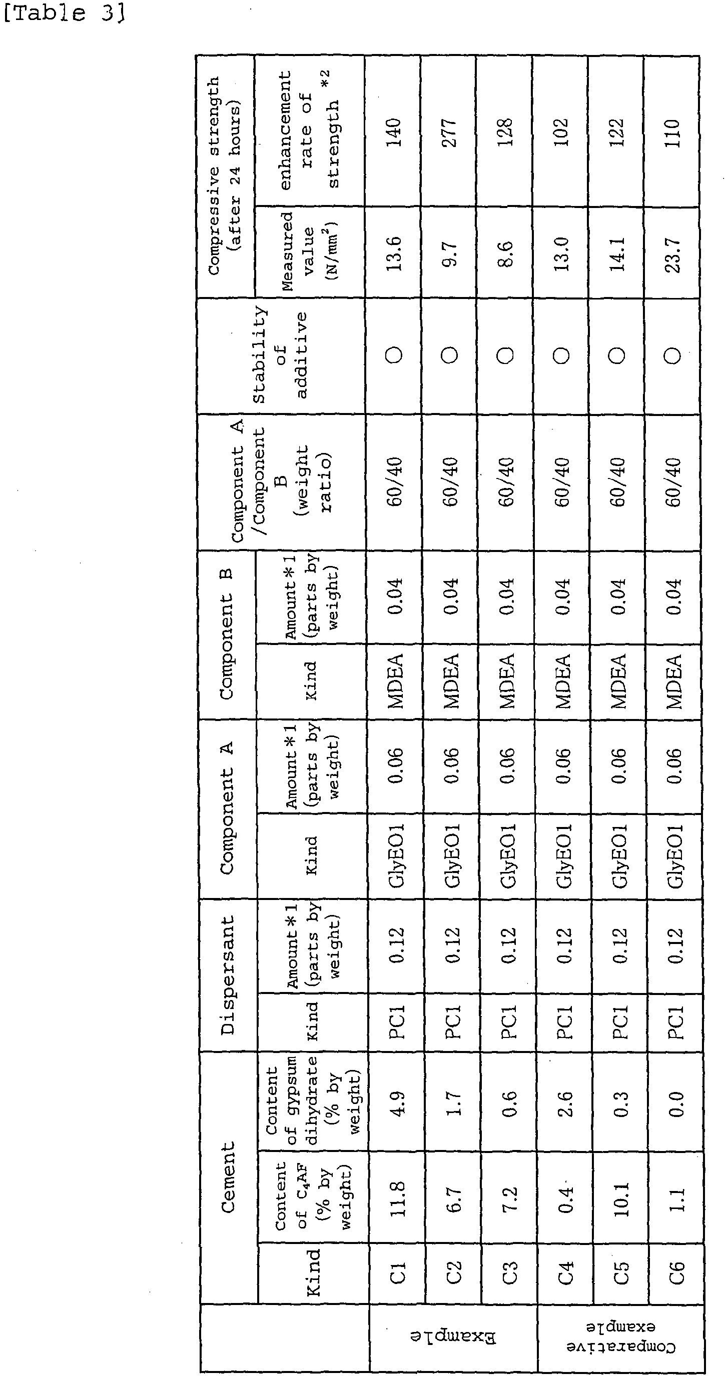

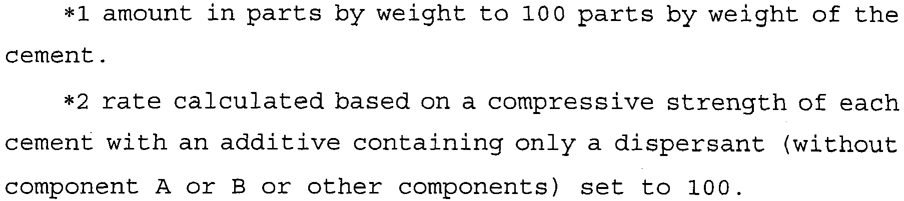

Table 3 shows that cements (C1 to C3) containing C₄AF in an amount of not less than 6.0% by weight to not more than 15% by weight and gypsum dihydrate in an amount of not less than 0.5% by weight to not more than 10% by weight had a higher compressive strength by adding a combination of an adduct of glycerol with 1 mole on the average of ethylene oxide with methyldiethanolamine, but cement (C4) containing C₄AF in an amount of less than 6.0% by weight and cements (C5 and C6) containing gypsum dihydrate in an amount of less than 0.5% by weight had almost the same compressive strength, by adding the combination, as no combination.

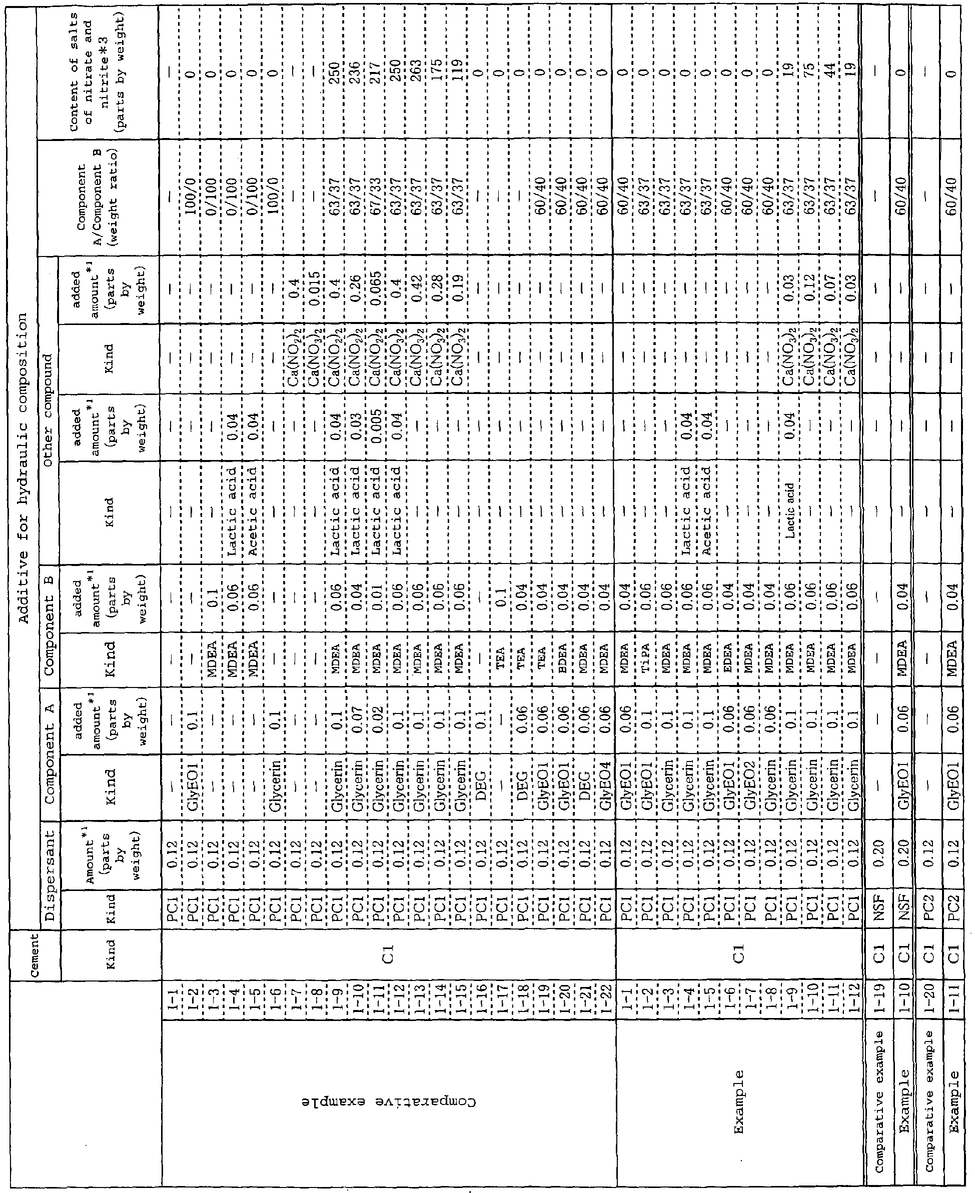

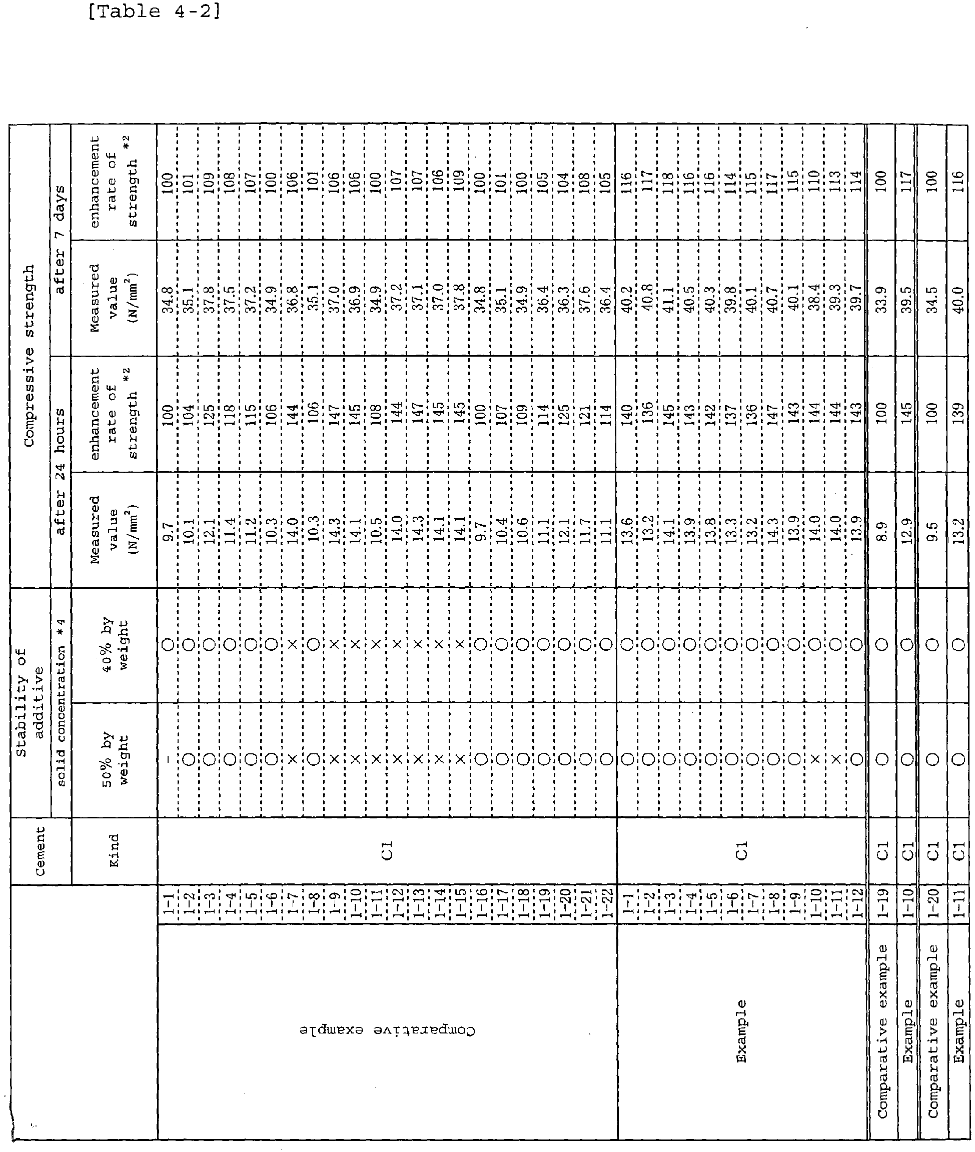

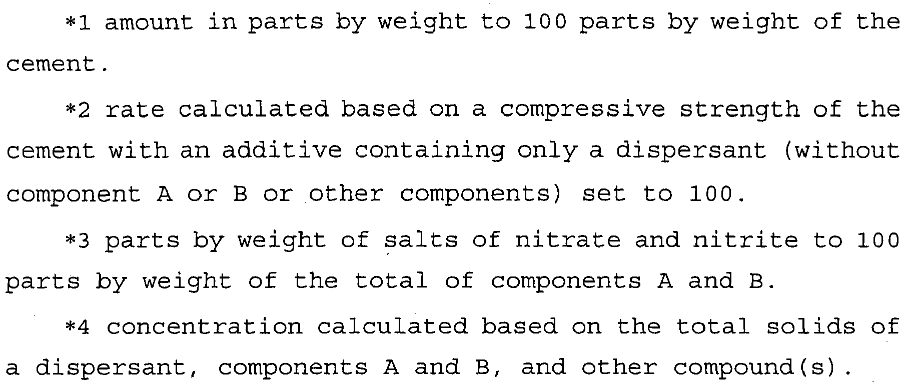

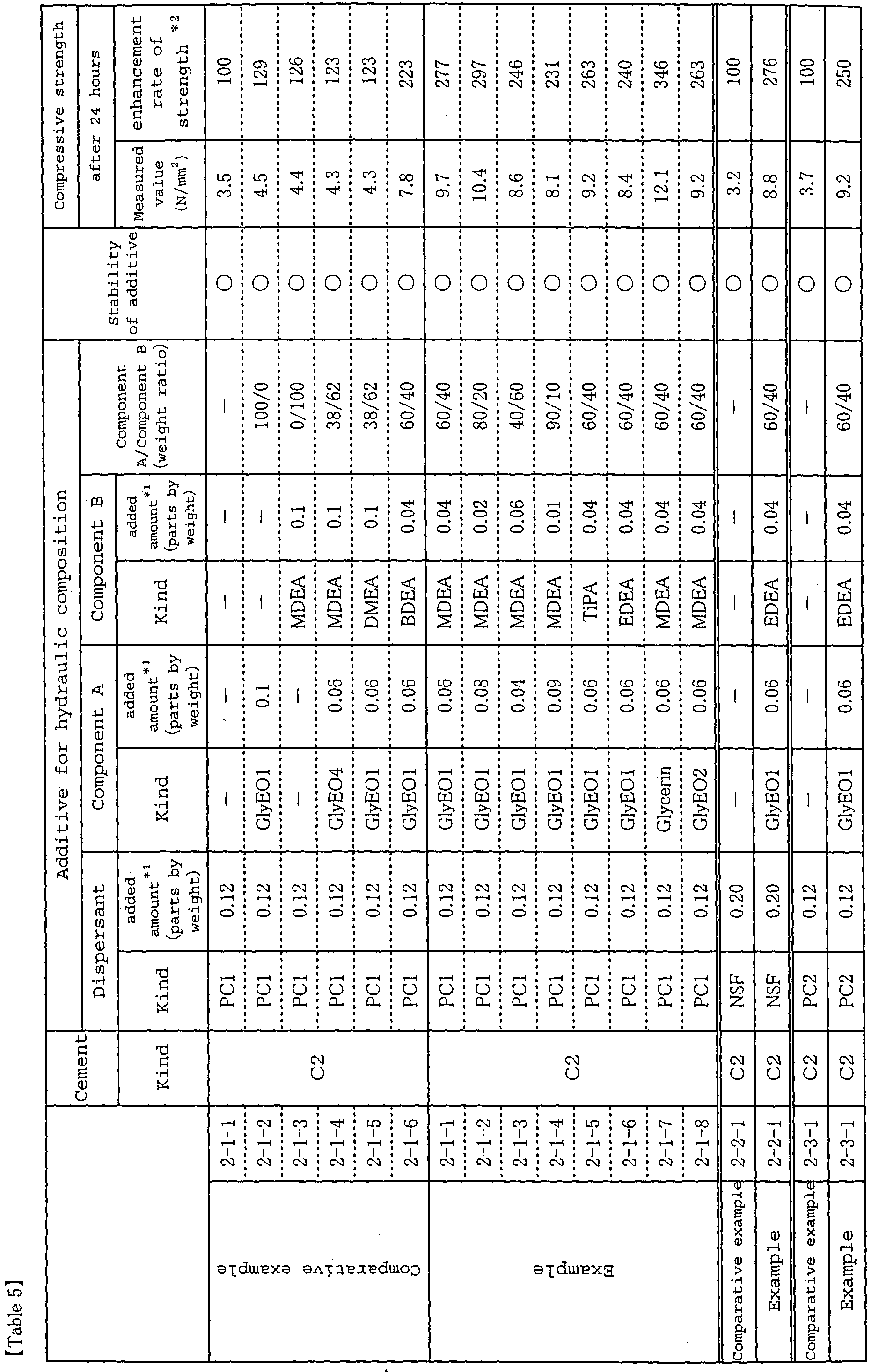

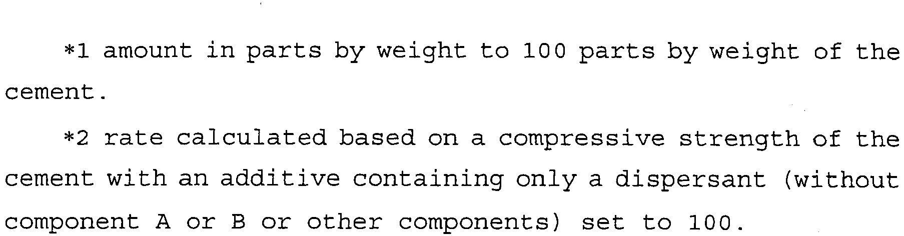

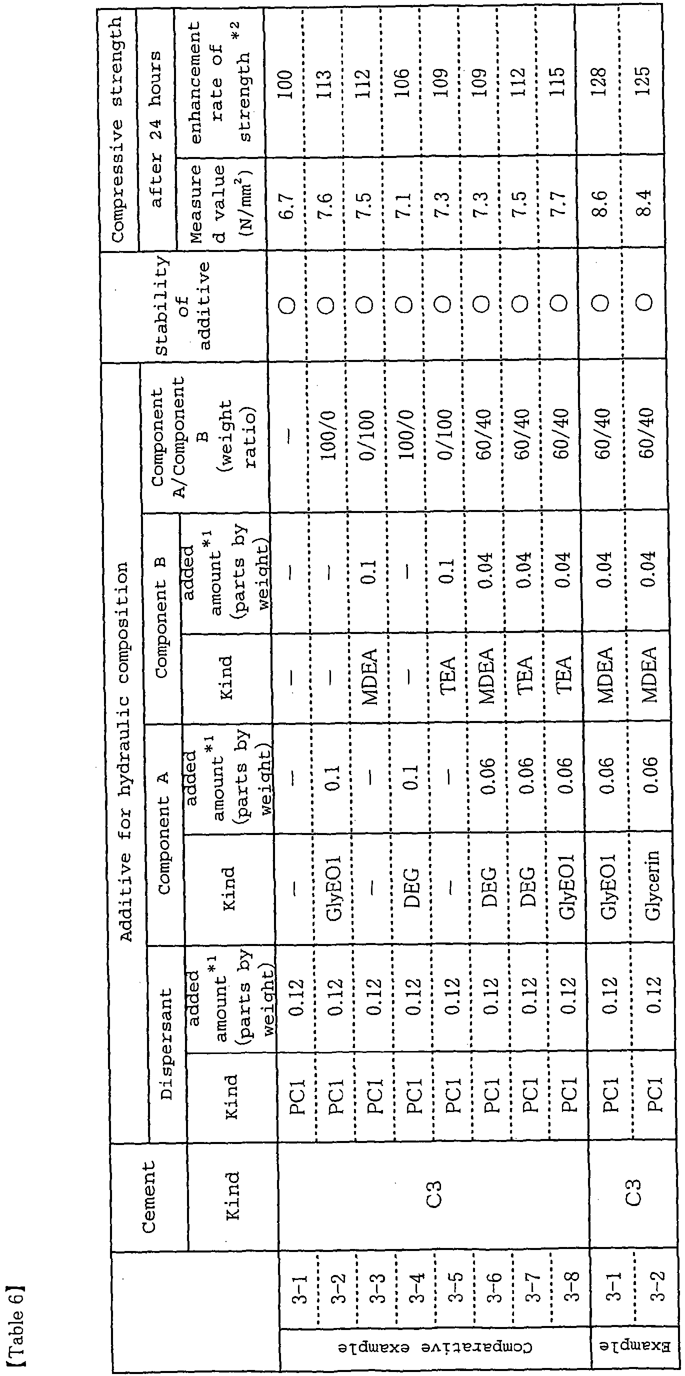

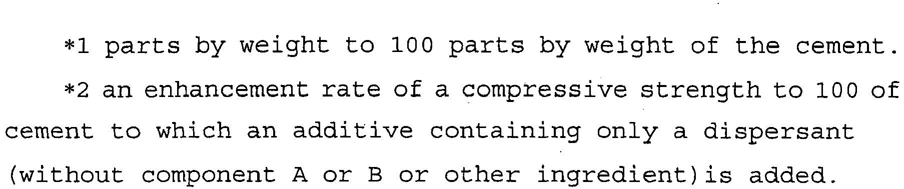

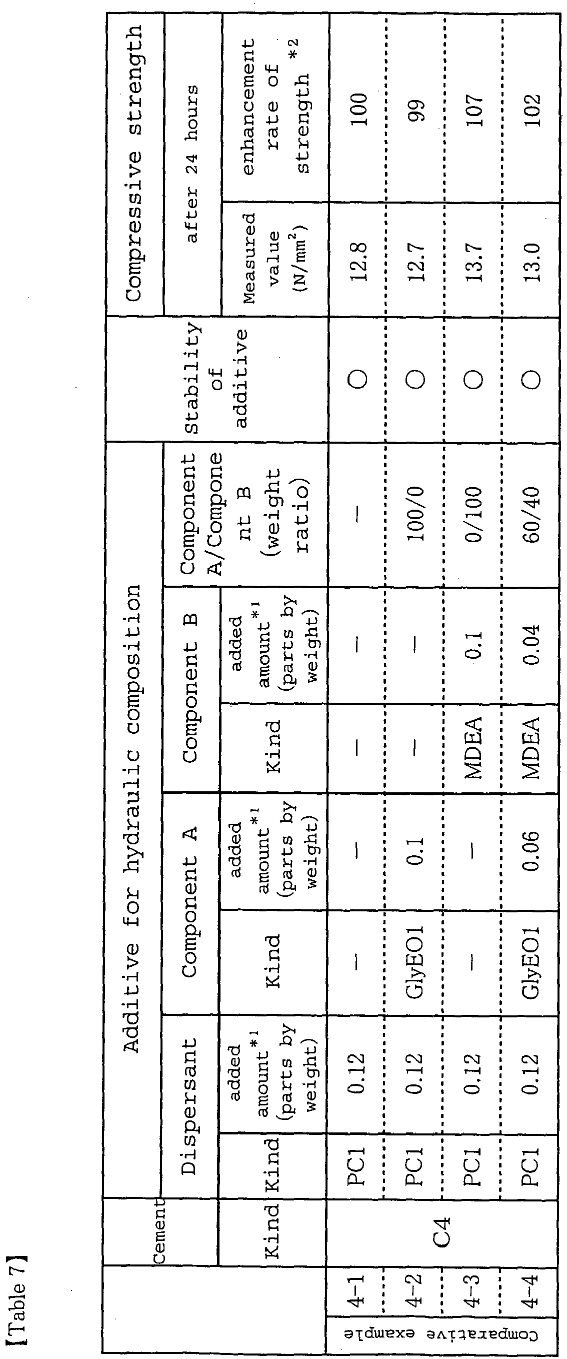

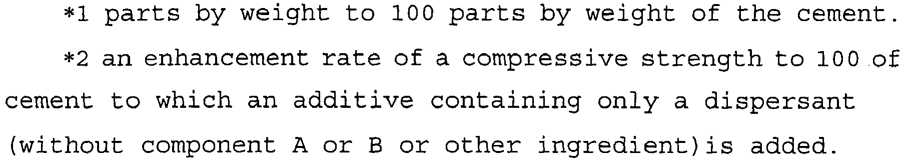

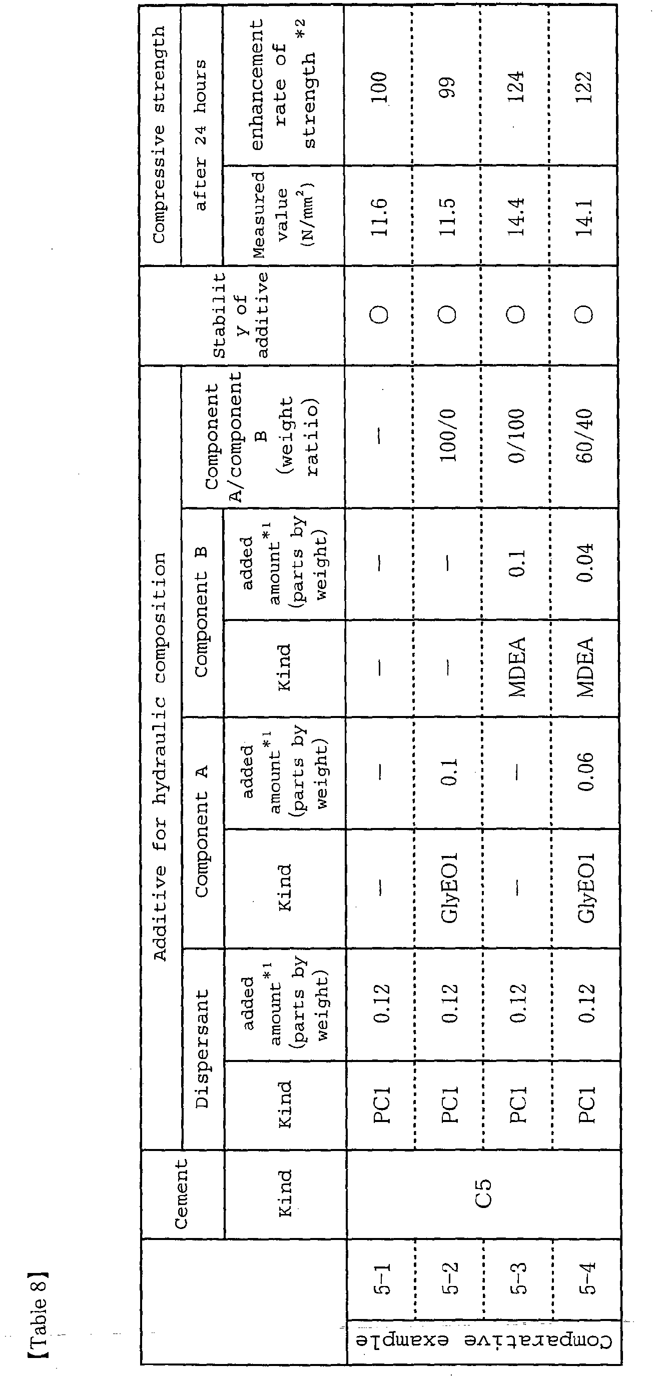

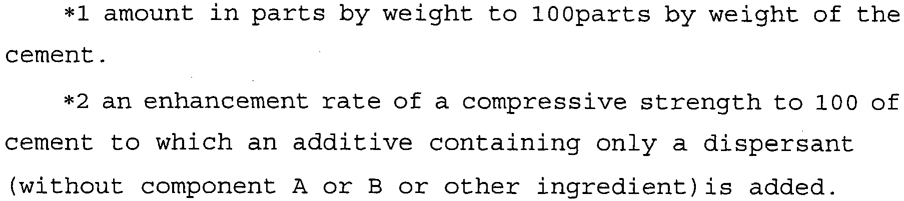

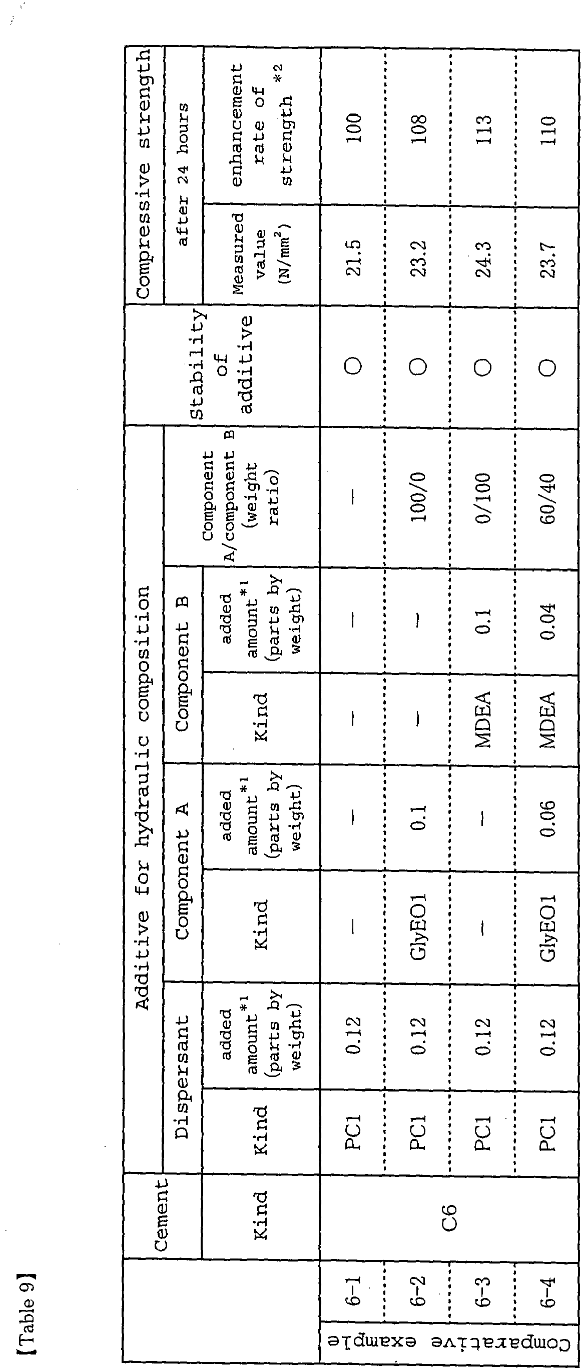

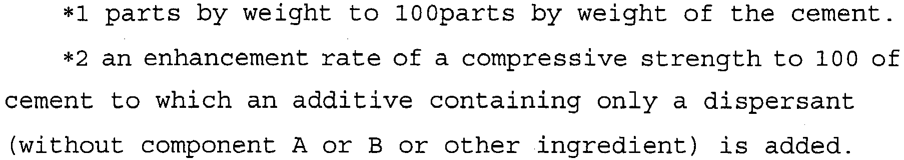

It is noted from results that the combination of a specific polyhydric alcohol, which is the component A of the present invention, and a specific amine compound, which is the component B of the present invention, exhibited an enhancement rate of a compressive strength on cements (C1 to C3) containing C₄AF in an amount of not less than 6.0% by weight to not more than 15% by weight and gypsum dihydrate in an amount of not less than 0.5% by weight to not more than 10% by weight in Tables 4-1, 4-2, 5 and 6 and cement (C4) containing C₄AF in an amount of less than 6.0% by weight and cements (C5 and C6) containing gypsum dihydrate in an amount of less than 0.5% by weight, shown in Table 7 to 9, had almost the same enhancement rate of a compressive strength by the combination as those having no combination.

## Claims

1. A method for producing a hydraulic composition comprising adding an additive for hydraulic composition to cement and water when these are kneaded, wherein
the additive comprises a dispersant, a polyhydric alcohol and an amine compound,
the polyhydric alcohol is at least one compound selected from glycerol and alkylene oxide adducts to glycerol in which more than 0 to not more than 3 moles of an alkylene oxide is added on the average,
the amine compound is at least one compound selected from triisopropanolamine and alkyldiethanolamines having an alkyl group with 1 to 3 carbon atoms,
a content of C4AF in the cement is not less than 6.0% by weight to not more than 15% by weight,
a content of gypsum dihydrate in the cement is not less than 0.5% by weight to not more than 10% by weight, and
a content of salts of nitrates and nitrites in the hydraulic composition is not more than 90 parts by weight per 100 parts by weight of the total amount of the polyhydric alcohol and the amine compound.

2. The method according to claim 1, wherein a weight ratio of the polyhydric alcohol to the amine compound in the hydraulic composition, polyhydric alcohol/amine compound, is not less than 20/80 to not more than 95/5.

3. The method according to claim 1 or 2 , wherein a content of the polyhydric alcohol in the hydraulic composition is not less than 0.01 part by weight to not more than 0.3 part by weight per 100 parts by weight of the cement.

4. The method according to any one of claims 1 to 3, wherein a content of the amine compound in the hydraulic composition is not less than 0.01 part by weight to not more than 0.1 part by weight per 100 parts by weight of the cement.

5. The method according to any one of claims 1 to 4, wherein the polyhydric alcohol is at least one compound selected from glycerol and alkylene oxide adducts of glycerol at an average molar addition rate of more than 0 to not more than 1.5.

## Patentansprüche

1. Verfahren zur Erzeugung einer hydraulischen Zusammensetzung, umfassend die Zugabe eines Additivs für eine hydraulische Zusammensetzung zu Zement und Wasser, wenn diese geknetet werden, worin
das Additiv ein Dispergiermittel, einen mehrwertigen Alkohol und eine Aminverbindung enthält,
der mehrwertige Alkohol zumindest eine Verbindung ist, ausgewählt aus Glycerin und Alkylenoxid-Addukten von Glycerin, worin mehr als 0 bis nicht mehr als 3 mol eines Alkylenoxides im Durchschnitt zugegeben werden,
die Aminverbindung zumindest eine Verbindung ist, ausgewählt aus Triisopropanolamin und Alkyldiethanolaminen mit einer Alkylgruppe mit 1 bis 3 Kohlenstoffatomen,
ein Gehalt von C4AF in dem Zement nicht weniger als 6,0 Gew.% bis nicht mehr als 15 Gew.% ist,
ein Gehalt an Gipsdihydrat im Zement nicht weniger als 0,5 Gew.% bis nicht mehr als 10 Gew.% ist, und
ein Gehalt von Salzen von Nitraten und Nitriten in der hydraulischen Zusammensetzung nicht mehr als 90 Gew.-Teile pro 100 Gew.-Teilen der gesamten Menge des mehrwertigen Alkohols und der Aminverbindung ist.

2. Verfahren gemäß Anspruch 1, worin ein Gewichtsverhältnis des mehrwertigen Alkohols zu der Aminverbindung in der hydraulischen Zusammensetzung, mehrwertiger Alkohol/Aminverbindung, nicht weniger als 20/80 bis nicht mehr als 95/5 ist.

3. Verfahren gemäß Anspruch 1 oder 2, worin ein Gehalt des mehrwertigen Alkohols in der hydraulischen Zusammensetzung nicht weniger als 0,01 Gew.-Teile bis nicht mehr als 0,3 Gew.-Teile pro 100 Gew.-Teilen des Zementes ist.

4. Verfahren gemäß einem der Ansprüche 1 bis 3, worin ein Gehalt der Aminverbindung in der hydraulischen Zusammensetzung nicht weniger als 0,01 Gew.-Teile bis nicht mehr als 0,1 Gew.-Teile pro 100 Gew.-Teilen Zement ist.

5. Verfahren gemäß einem der Ansprüche 1 bis 4, worin der mehrwertige Alkohol zumindest eine Verbindung ist, ausgewählt aus Glycerin und Alkylenoxid-Addukten von Glycerin bei einer durchschnittlichen molaren Additionsrate von mehr als 0 bis nicht mehr als 1,5 ist.

## Revendications

1. Procédé de production d'une composition hydraulique comprenant l'ajout d'un additif pour composition hydraulique à un ciment et de l'eau quand ceux-ci sont malaxés, dans lequel
l'additif comprend un dispersant, un alcool polyhydrique et un composé d'amine,
l'alcool polyhydrique est au moins un composé sélectionné parmi le glycérol et des adduits d'oxyde d'alkylène au glycérol dans lesquels plus de 0 à au plus 3 moles d'un oxyde d'alkylène sont ajoutées en moyenne,
le composé d'amine est au moins un composé sélectionné parmi la triisopropanolamine et des alkyldiéthanolamines ayant un groupe alkyle à 1 à 3 atomes de carbone,
une teneur en C4AF dans le ciment n'est pas inférieure à 6,0 % en poids et n'est pas supérieure à 15 % en poids,
une teneur en gypse dihydraté dans le ciment n'est pas inférieure à 0,5 % en poids et n'est pas supérieure à 10 % en poids, et
une teneur en sels de nitrates et de nitrites dans la composition hydraulique n'est pas supérieure à 90 parties en poids pour 100 parties en poids de la quantité totale de l'alcool polyhydrique et du composé d'amine.

2. Procédé selon la revendication 1, dans lequel un rapport en poids de l'alcool polyhydrique sur le composé d'amine dans la composition hydraulique, alcool polyhydrique/composé d'amine, n'est pas inférieur à 20/80 et n'est pas supérieur à 95/5.

3. Procédé selon la revendication 1 ou 2, dans lequel une teneur en alcool polyhydrique dans la composition hydraulique n'est pas inférieure à 0,01 partie en poids et n'est pas supérieure à 0,3 partie en poids pour 100 parties en poids du ciment.

4. Procédé selon l'une quelconque des revendications 1 à 3, dans lequel une teneur en composé d'amine dans la composition hydraulique n'est pas inférieure à 0,01 partie en poids et n'est pas supérieure à 0,1 partie en poids pour 100 parties en poids du ciment.

5. Procédé selon l'une quelconque des revendications 1 à 4, dans lequel l'alcool polyhydrique est au moins un composé sélectionné parmi le glycérol et des adduits d'oxyde d'alkylène au glycérol à un taux d'ajout molaire moyen de plus de 0 à au plus 1,5.
